# EUROPÄISCHE PATENTANMELDUNG

(11) **EP 4 748 625 A1**
(43) Veröffentlichungstag der Anmeldung: **27.05.2026**
(21) Anmeldenummer: 25218023.7
(22) Anmeldetag: 24.11.2025
(51) Int. Cl.: B60L 50/53, B60L 50/60, B60L 53/30, B60L 53/62, B60L 53/63, B60L 53/64, B60L 53/66, B60L 53/68, B60L 58/12, B60L 58/13

(54) **VERFAHREN ZUM BETREIBEN EINES ENERGIEVERSORGUNGSSYSTEMS FÜR ELEKTRISCHE SCHIENENFAHRZEUGE**

(30) Priorität: 22.11.2024 DE 102024211230
(71) Anmelder: Siemens Mobility GmbH, 80997 München (DE)
(72) Erfinder: Gruber Löw, Stefan, 91058 Erlangen (DE); Hassler, Stefan, 91058 Erlangen (DE); Probst, Sebastian, 91058 Erlangen (DE)
(74) Vertreter: Siemens Patent Attorneys

(57) **Zusammenfassung**

Bei einem erfindungsgemäßen Verfahren zum Betreiben eines Energieversorgungssystems, wobei das Energieversorgungssystem einer Versorgung einer Flotte von elektrischen Schienenfahrzeugen dient, wobei eine Mehrzahl der Schienenfahrzeuge jeweils zumindest einen elektrischen Energiespeicher aufweist, welcher einer Versorgung eines Antriebssystems des Schienenfahrzeugs dient, wobei eine jeweilige Steuervorrichtung der Mehrzahl Schienenfahrzeuge über eine Programmierschnittstelle mit einer zentralen Datenverarbeitungsvorrichtung verbunden ist, wird eine jeweilige Information erster Art betreffend eine erfasste Betriebskenngröße des Energiespeichers des jeweiligen Schienenfahrzeugs der Datenverarbeitungsvorrichtung mittels der Programmierschnittstelle bereitgestellt, wird von der Datenverarbeitungsvorrichtung auf Basis der bereitgestellten Informationen erster Art und abhängig von einem Betriebszustand des Energieversorgungssystems ein Soll-Betriebszustand des Energiespeichers des jeweiligen Schienenfahrzeugs ermittelt und wird der Steuervorrichtung des jeweiligen Schienenfahrzeugs als jeweilige Information zweiter Art mittels der Programmierschnittstelle bereitgestellt, und wird von der Steuervorrichtung des jeweiligen Schienenfahrzeugs abhängig von der bereitgestellten Information zweiter Art ein Laden des Energiespeichers aus dem Energieversorgungssystem oder ein Entladen des Energiespeichers in das Energieversorgungssystem gesteuert wird.

## Beschreibung

Die Erfindung betrifft ein Verfahren zum Betreiben eines Energieversorgungssystems für elektrische Schienenfahrzeuge sowie ein System zur Durchführung des erfindungsgemäßen Verfahrens.

Bahnstromsysteme als eine besondere Ausgestaltung eines Energieversorgungsystems dienen einer Versorgung von elektrischen Schienenfahrzeugen mit elektrischer Energie. Die elektrische Energie wird dabei über entlang der Strecken des Schienennetzes angeordnete Oberleitungen oder Stromschienen, mit welchen sich die Schienenfahrzeuge bzw. deren elektrischen Antriebssysteme über Stromabnehmer elektrisch verbinden können, bereitgestellt. Ein Bahnstromsystem kann über eigene elektrische Energiequellen verfügen und/oder mit einem öffentlichen Stromnetz verbunden sein. Als Energiequelle dienen zunehmend regenerative Energieerzeuger wie insbesondere Solar- und Windenergie, deren Energieerzeugung naturgemäß starken Schwankungen unterliegt. Diese Schwankungen werden beispielsweise durch ergänzende Energieerzeuger ausgeglichen, welche bedarfsabhängig elektrische Energie wahlweise bereitstellen oder aufnehmen können, wodurch eine effiziente Nutzung der regenerativ erzeugten Energie ermöglicht wird. Solche Energieerzeuger, die eine für den Ausgleich solcher Schwankungen von regenerativen Energieerzeugern kurzfristig abrufbare Regelleistung bereitstellen, sind beispielsweise stationäre elektrische Energiespeicher. Diese weisen nachteilig jedoch einen hohen Platzbedarf sowie typischerweise nur eine begrenzte Kapazität zur Speicherung elektrischer Energie auf.

Schienenfahrzeuge, insbesondere Triebzüge für die Personenbeförderung, werden zunehmend mit einem oder mehreren elektrischen Energiespeichern, speziell so genannten Antriebs- bzw. Traktionsbatterien, ausgestattet. Diese Energiespeicher ermöglichen einen Betrieb der Schienenfahrzeuge auch auf Strecken bzw. Streckenabschnitten ohne streckenseitige Energieversorgung über Oberleitungen oder Stromschienen. In solchen so genannten nicht-elektrifizierten Abschnitten wird das elektrische Antriebssystem sowie weitere elektrische Verbraucher des jeweiligen Schienenfahrzeugs mit in dem elektrischen Energiespeicher gespeicherter Energie versorgt. Ein Laden des bzw. der Energiespeicher mit elektrischer Energie erfolgt in elektrifizierten Abschnitten und/oder an speziellen Ladestationen, die beabstandet voneinander entlang des nicht-elektrifizierten Abschnitts angeordnet sind. Auch können solche ebenso dem Bahnstromsystem zugeordneten Ladestationen beispielsweise im Bereich von Depots und Abstellgleisen angeordnet sein.

Aufgabe der Erfindung ist es, den Betrieb eines Energieversorgungssystems für elektrische Schienenfahrzeuge zu verbessern.

Diese Aufgabe wird durch ein Verfahren sowie ein System mit den jeweiligen Merkmalen der unabhängigen Patentansprüche gelöst. Weiterbildungen sind in abhängigen Patentansprüchen angegeben.

Bei einem erfindungsgemäßen Verfahren zum Betreiben eines Energieversorgungssystems, wobei das Energieversorgungssystem einer Versorgung einer Flotte von elektrischen Schienenfahrzeugen dient, wobei eine Mehrzahl der Schienenfahrzeuge jeweils zumindest einen elektrischen Energiespeicher aufweist, welcher einer Versorgung eines Antriebssystems des Schienenfahrzeugs dient, wobei eine jeweilige Steuervorrichtung der Mehrzahl Schienenfahrzeuge über eine Programmierschnittstelle mit einer zentralen Datenverarbeitungsvorrichtung verbunden ist, wird eine jeweilige Information erster Art betreffend eine erfasste Betriebskenngröße des Energiespeichers des jeweiligen Schienenfahrzeugs der Datenverarbeitungsvorrichtung mittels der Programmierschnittstelle bereitgestellt, wird von der Datenverarbeitungsvorrichtung auf Basis der bereitgestellten Informationen erster Art und abhängig von einem Betriebszustand des Energieversorgungssystems ein Soll-Betriebszustand des Energiespeichers des jeweiligen Schienenfahrzeugs ermittelt und wird der Steuervorrichtung des jeweiligen Schienenfahrzeugs als jeweilige Information zweiter Art mittels der Programmierschnittstelle bereitgestellt, und wird von der Steuervorrichtung des jeweiligen Schienenfahrzeugs abhängig von der bereitgestellten Information zweiter Art ein Laden des Energiespeichers aus dem Energieversorgungssystem oder ein Entladen des Energiespeichers in das Energieversorgungssystem gesteuert wird.

Nach einer Weiterbildung des erfindungsgemäßen Verfahrens wird als die Betriebskenngröße des Energiespeichers ein Ist-Ladezustand, eine Ist-Ladeleistung, eine Ist-Entladeleistung, eine maximale Ladeleistung, eine maximale Entladeleistung, eine freie Kapazität und/oder eine Gesamt-Kapazität erfasst.

Nach einer weiteren Weiterbildung des erfindungsgemäßen Verfahrens wird ein Leistungsbedarf des jeweiligen Schienenfahrzeugs erfasst und der Datenverarbeitungsvorrichtung als eine Information dritter Art mittels der Programmierschnittstelle bereitgestellt, und wird von der Datenverarbeitungsvorrichtung auf Basis der bereitgestellten Informationen erster Art und dritter Art die Information zweiter Art für das jeweilige Schienenfahrzeug ermittelt.

Nach einer weiteren Weiterbildung des erfindungsgemäßen Verfahrens wird die Betriebskenngröße des Energiespeichers des jeweiligen Schienenfahrzeugs für einen zukünftigen vorbestimmten Zeitraums prognostiziert und als die Information erster Art der Datenverarbeitungsvorrichtung mittels der Programmierschnittstelle bereitgestellt, wobei die prognostizierte Betriebskenngröße insbesondere auf Basis eines prognostizierten Leistungsbedarfs des jeweiligen Schienenfahrzeugs während des vorbestimmten Zeitraums bestimmt wird, und wird von der Datenverarbeitungsvorrichtung auf Basis der bereitgestellten Informationen erster Art der Soll-Betriebszustand des Energiespeichers des jeweiligen Schienenfahrzeugs für den zukünftigen vorbestimmten Zeitraum ermittelt und als Information zweiter Art mittels der Programmierschnittstelle bereitgestellt.

Nach einer weiteren Weiterbildung des erfindungsgemäßen Verfahrens wird die bereitgestellte Information zweiter Art von der Steuervorrichtung des jeweiligen Schienenfahrzeugs, insbesondere manuell unterstützt, überprüft sowie gegebenenfalls korrigiert, und wird auf Basis der überprüften und gegebenenfalls korrigierten Information zweiter Art von der Steuervorrichtung des jeweiligen Schienenfahrzeugs das Laden des Energiespeichers aus dem Energieversorgungssystem oder das Entladen des Energiespeichers in das Energieversorgungssystem gesteuert, wobei, sofern die Information zweiter Art korrigiert wurde, eine Information bezüglich der Korrektur, insbesondere die korrigierte Information zweiter Art, der Datenverarbeitungsvorrichtung von der Steuervorrichtung mittels der Programmierschnittstelle bereitgestellt wird.

Nach einer weiteren Weiterbildung des erfindungsgemäßen Verfahrens wird von jedem der Mehrzahl Schienenfahrzeuge der Flotte jeweils ein Betriebszustand erfasst und eine den Betriebszustand betreffende vierte Information der Datenverarbeitungsvorrichtung mittels der Programmierschnittstelle bereitgestellt, und wird von der Datenverarbeitungsvorrichtung auf Basis der Informationen vierter Art und der Information erster Art die Information zweiter Art des jeweiligen Schienenfahrzeugs ermittelt.

Ein erfindungsgemäßes System umfasst ein Energieversorgungssystem, welches ausgestaltet ist, eine Flotte von elektrischen Schienenfahrzeugen mit elektrischer Energie zu versorgen, eine Mehrzahl Schienenfahrzeuge der Flotte, welche jeweils zumindest einen Energiespeicher aufweist, wobei der Energiespeicher einer Versorgung eines Antriebssystems des Schienenfahrzeugs dient, und welche jeweils eine Steuervorrichtung aufweist, die ausgestaltet ist, ein Laden des Energiespeichers aus dem Energieversorgungssystem oder ein Entladen des Energiespeichers in das Energieversorgungssystem zu steuern, und eine zentrale Datenverarbeitungsvorrichtung, welche ausgestaltet ist, einen Soll-Betriebszustand des Energiespeichers des jeweiligen Schienenfahrzeugs zu steuern, wobei die Steuervorrichtungen der Mehrzahl Schienenfahrzeuge jeweils über eine Programmierschnittstelle mit der zentralen Datenverarbeitungsvorrichtung verbunden sind, wobei die jeweilige Programmierschnittstelle einer Bereitstellung von Informationen dient, und
wobei das Energieversorgungssystem, die Mehrzahl Schienenfahrzeuge und die zentrale Datenverarbeitungsvorrichtung ausgestaltet sind zur Durchführung des erfindungsgemäßen Verfahrens.

Nach einer Weiterbildung des erfindungsgemäßen Systems ist das Energieversorgungssystem als ein Bahnstromsystem ausgestaltet, und/oder ist die Datenverarbeitungsvorrichtung dem Energieversorgungssystem und/oder einem Betreiber der Flotte von Schienenfahrzeugen zugeordnet.

Bei der Steuervorrichtung des jeweiligen Schienenfahrzeugs kann es sich um einen Computer, einen Mikrocontroller, einen Prozessor oder um eine andere programmierbare Hardwarekomponente handeln. Die Steuervorrichtung ist insbesondere dazu eingerichtet, Daten einzulesen, zu empfangen, zu schreiben, zu übertragen und/oder zu verwalten. Des Weiteren kann die Steuervorrichtung Teil einer zentralen Fahrzeugsteuerung sein. Alternativ oder zusätzlich kann die Steuervorrichtung dezentral ausgeführt sein, wobei mehrere Steuervorrichtungen des Schienenfahrzeugs dazu eingerichtet sind, Steueraufgaben gemeinsam zu bewältigen. Insbesondere kann dies mittels eines so genannten Edge-Computing erfolgen, wobei freie Rechenkapazitäten verschiedener in dem Schienenfahrzeug vorgesehener Steuervorrichtungen genutzt werden. Edge-Computing ist dabei im Sinne der Informationstechnologie zu verstehen.

Ein jeweiliger elektrischer Energiespeicher des Schienenfahrzeugs ist beispielsweise als eine Antriebs- bzw. Traktionsbatterie ausgestaltet, welche durch eine geeignete Verschaltung einer Mehrzahl von Batteriezellen eine erforderliche Spannung und Kapazität bereitstellt, um das elektrische Antriebssystem sowie weitere elektrische Verbraucher des Schienenfahrzeugs mit elektrischer Energie zu versorgen, insbesondere wenn dieses nicht mit einem Energieversorgungsnetz elektrisch verbunden ist.

Die sowohl auf Seiten der Schienenfahrzeuge bzw. deren Steuervorrichtung als auch der zentralen Datenverarbeitungsvorrichtung erfindungsgemäß eingesetzte Programmierschnittstelle ist im Sinne der Informationstechnologie zu verstehen. Eine solche Programmierschnittstelle wird im englischen Sprachgebrauch als "Application Programming Interface", abgekürzt "API", bezeichnet. Die Programmierschnittstelle ist vorzugsweise dazu eingerichtet, verschiedene Systeme miteinander zu verknüpfen, sodass Daten oder Informationen zwischen diesen Systemen ausgetauscht werden können. Erfindungsgemäß werden mittels der Programmierschnittstelle die unterschiedlichen Systeme der zentralen Datenverarbeitungsvorrichtung und der Steuervorrichtungen auf der Schienenfahrzeugseite Daten bzw. Informationen der verschiedenen Art ausgetauscht.

Bei der zentralen Datenverarbeitungsvorrichtung kann es sich beispielsweise um einen Computer, einen Mikrocontroller, einen Prozessor, einen Server oder um eine andere programmierbare Hardwarekomponente handeln. Zusätzlich oder alternativ kann es sich bei der zentralen Datenverarbeitungsvorrichtung um eine virtualisierte Hardwareressource, eine Rechnerwolke und/oder um eine Laufzeitumgebung mit veränderbaren Rechen- und/oder Speicherkapazitäten handeln. Die genannte Laufzeitumgebung soll dabei im Zusammenhang mit der vorliegenden Erfindung im Sinne der Informatik verstanden werden. Die zentrale Datenverarbeitungsvorrichtung ist insbesondere dazu eingerichtet, Daten einzulesen, zu empfangen, zu schreiben, zu übertragen und/oder zu verwalten. Im bevorzugten Anwendungsfall ist die zentrale Datenverarbeitungsvorrichtung stationär ausgeführt und der so genannten Landseite des Systems, im Gegensatz zu der Fahrzeugseite, zugeordnet.

Das erfindungsgemäße Verfahren ermöglicht insbesondere, eine Betriebskenngröße, beispielsweise eine Ladeleistung, eine Entladeleistung und/oder einen Ladezustand, eines Energiespeichers des jeweiligen Schienenfahrzeugs mittels einer fahrzeug-externen Vorrichtung zu steuern. Dies ermöglicht vorteilhaft, Kapazitäten von Energiespeichern von Schienenfahrzeugen der Flotte als ergänzende Regelleistungskapazität für das Energieversorgungssystem zu nutzen. Dabei können, abhängig von der verfügbaren Speicherkapazität in den Energiespeichern der Schienenfahrzeuge, hohe Energiemengen schnell gespeichert oder freigegeben werden, wodurch hohe positive oder negative elektrische Leistungen kurzfristig für einen zuverlässigen Betrieb des Energieversorgungssystems bereitgestellt werden können. Die Programmierschnittstelle ermöglicht dabei eine individuelle Ansteuerung der Energiespeicher der Schienenfahrzeuge durch die zentrale Datenverarbeitungsvorrichtung. Sowohl einzelne Schienenfahrzeuge als auch die gesamte Flotte sind hierdurch individuell bzw. gemeinsam, beispielsweise von dem Betreiber der Flotte, bedarfsgerecht als Regelleistungskapazität für das Energieversorgungssystem nutzbar.

Bei der maximalen Ladeleistung und der maximalen Entladeleistung handelt es sich üblicherweise um dynamische Betriebskenngrößen, welche von einem Ist-Ladezustand eines zugehörigen Energiespeichers abhängig sind. Anhand der Betriebskenngrößen kann aufwandsgünstig ermittelt werden, welche Menge an elektrischer Energie mittels des Energiespeichers gespeichert oder abgegeben werden kann. Des Weiteren kann anhand der Betriebskenngrößen eine maximal mögliche oder zu einem vorbestimmten Zeitpunkt zur Verfügung stehende Lade- und/oder Entladeleistung ermittelt werden. Unter Berücksichtigung einer Ist-Ladeleistung oder einer Ist-Entladeleistung können auf zuverlässige Weise Ladeleistungskapazitäten bzw. Entladeleistungskapazitäten ermittelt werden. Dies erlaubt es, zeitliche Verläufe eines Ladevorgangs oder eines Entladevorgangs vorzugeben. Dadurch kann auf eine vorbestimmte Weise zeitabhängig eine Leistungsabgabe oder Leistungsaufnahme gesteuert werden. Eine verfügbare Regelleistungskapazität kann auf diese Weise schnell und aufwandsgünstig ermittelt werden. Ferner kann dadurch ein Soll-Ladezustand, eine Soll-Ladeleistung und/oder eine Soll-Entladeleistung vorgegeben werden, bei welchem ein aktueller Betriebszustand eines betroffenen Energiespeichers zuverlässig berücksichtigt wird.

Die Information dritter Art wird mittels der Programmierschnittstelle der Datenverarbeitungsvorrichtung von dem Schienenfahrzeug bzw. deren Steuervorrichtung bereitgestellt. Von der Datenverarbeitungsvorrichtung wird auf Basis der bereitgestellten Informationen erster Art sowie auf Basis der Information dritter Art die Information zweiter Art für das jeweilige Schienenfahrzeug ermittelt. Beispielsweise wird die Information dritter Art von der Steuervorrichtung des jeweiligen Schienenfahrzeugs ermittelt. Ein Soll-Ladezustand, eine Soll-Entladeleistung und/oder eine Soll-Ladeleistung eines Energiespeichers kann dadurch auf zuverlässige Weise unter Berücksichtigung eines aktuellen Leistungsbedarfs des Schienenfahrzeugs ermittelt werden. Hierdurch kann verhindert werden, dass ein Leistungsbedarf des Schienenfahrzeugs insbesondere für das Antriebssystem eine von dessen Energiespeicher bereitstellbare elektrische Energie übersteigt. Eine Betriebsunterbrechung kann dadurch zuverlässig verhindert werden. Darüber hinaus kann mit einer verbesserten Genauigkeit eine freie Kapazität des Energiespeichers ermittelt werden.

Von jedem der Mehrzahl Schienenfahrzeuge wird die jeweils ermittelte Information erster Art mittels der Programmierschnittstelle der zentralen Datenverarbeitungsvorrichtung bereitgestellt. Für jedes der mehreren Schienenfahrzeuge ist daraufhin vorgesehen, dass jeweils eine zugehörige Information zweiter Art auf Basis der bereitgestellten Informationen erster Art ermittelt wird. Zweckmäßigerweise wird die Information zweiter Art mittels der zentralen Datenverarbeitungsvorrichtung ermittelt. Anschließend wird von der zentralen Datenverarbeitungsvorrichtung jedem der mehreren Schienenfahrzeuge jeweils eine zugehörige Information zweiter Art mithilfe der Programmierschnittstelle bereitgestellt. Auf Basis dieser zweiten Informationen wird eine Übertragung elektrischer Energie von Energiespeichern der mehreren Schienenfahrzeuge in das Energieversorgungssystem oder von dem Energieversorgungssystem in Energiespeicher der mehreren Schienenfahrzeuge gesteuert.

Große Energiemengen können dadurch kurzfristig und schnell auf eine Vielzahl von Energiespeichern verteilt werden. Eine übermäßige Belastung einzelner Energiespeicher kann hingegen verringert bzw. vermieden werden, wodurch eine lange Lebensdauer der Energiespeicher trotz der ergänzenden Nutzung erreicht werden kann. Vorteilhaft kann mithilfe der Flotte bzw. eines Teils der Flotte ein virtualisiertes Kraftwerk bereitgestellt werden, mittels welchem eine große Regelleistungskapazität, gegebenenfalls ergänzend, bereitgestellt werden kann. Eine Flotte kann dadurch zuverlässig zum Zwecke eines Ausgleichs von Leistungsschwankungen hinsichtlich des Bedarfs und der Verfügbarkeit an elektrischer Energie in einem Energieversorgungssystem für Schienenfahrzeuge genutzt werden. Überdies besteht die Möglichkeit, eine dadurch bereitgestellte Regelleistungskapazität auf einem Regelleistungsmarkt anzubieten. Neben einer Berücksichtigung der Verfügbarkeit sowie des Bedarfs an elektrischer Energie innerhalb des Energieversorgungssystems kann überdies ein Regelleistungsbedarf in übergeordneten oder nebengeordneten Energieversorgungssystemen berücksichtigt werden. Dadurch kann mithilfe des vorliegenden Verfahrens eine wirtschaftliche Verwertbarkeit einer Schienenfahrzeugflotte gesteigert werden. Überdies kann mithilfe der Programmierschnittstelle separat für jedes Schienenfahrzeug entschieden werden, inwieweit eine Betriebskenngröße bzw. ein Betriebszustand eines Energiespeichers verändert werden soll. Dies ermöglicht es einem Betreiber, aufwandsgünstig eine individuelle Gestaltung eines Betriebs seiner Schienenfahrzeugflotte vorzusehen.

Ergänzend kann in dem erfindungsgemäßen Verfahren vorgesehen werden, dass auf Basis der erfassten Informationen erster Art betreffend eine Betriebskenngröße der Energiespeicher der mehreren Schienenfahrzeuge jeweils separat eine Information betreffend einen Soll-Betriebszustand für jeden Energiespeicher der mehreren Schienenfahrzeuge ermittelt wird. Die Information betreffend den Soll-Betriebszustand des jeweiligen Energiespeichers wird gesondert dem jeweils zugehörigen Schienenfahrzeug mittels der Programmierschnittstelle bereitgestellt. Bei der Information betreffend den Soll-Betriebszustand handelt es sich zweckmäßigerweise um einen Soll-Wert einer vorbestimmten Betriebskenngröße, wie beispielsweise eines Ladezustands, einer Ladeleistung und/oder einer Entladeleistung.

Mithilfe der Programmierschnittstelle kann eine Art und/oder ein Umfang der zwischen dem jeweiligen Schienenfahrzeug und der Datenverarbeitungsvorrichtung bereitzustellenden Informationen gesteuert werden. Die Nutzung eines Energiespeichers eines Schienenfahrzeugs zum Zwecke einer Bereitstellung einer Regelleistung kann dabei mithilfe der Programmierschnittstelle individuell gestaltet werden. Der Betreiber eines Schienenfahrzeugs einer Flotte kann bedarfsgerecht einen Soll-Betriebszustand des jeweiligen Energiespeichers für vorbestimmte Fahrzeugtypen oder für Schienenfahrzeuge in vorbestimmten Betriebszuständen steuern. Ferner können individuelle Bedürfnisse aufwandsgünstig mithilfe der Programmierschnittstelle realisiert werden.

Insbesondere kann vorgesehen sein, dass die bereitgestellte Information zweiter Art manuell überprüft, korrigiert und/oder freigegeben wird. Auf Basis der manuell überprüften, korrigierten und/oder freigegebenen Information zweiter Art betreffend den Soll-Betriebszustand des Energiespeichers kann anschließend die Übertragung von elektrischer Energie von dem Energiespeicher des Fahrzeugs in das stationäre Energieversorgungssystem oder von dem stationären Energieversorgungssystem in den Energiespeicher des Fahrzeugs gesteuert werden. Eine solche manuelle Überprüfung, Korrektur und/oder Freigabe einer durch die Information zweiter Art vorgegebenen Steuergröße kann durch einen Betreiber und/oder die fahrzeugführende Person erfolgen. Dies ermöglicht es, durch Vermeidung erhöhter Belastungen eine Lebensdauer der Energiespeicher zu verlängern sowie die Betriebssicherheit des Schienenfahrzeugs nicht zu beeinträchtigen. Im einzelnen Anwendungsfall kann ferner eine Restreichweite des Schienenfahrzeugs nach individuellen Bedürfnissen gesteuert werden. So kann die Information betreffend den Soll-Betriebszustand beispielsweise als Empfehlung für einen effizienten Betrieb des Energieversorgungssystems genutzt werden.

Eine Prognose betreffend eine freie Kapazität, eine zur Verfügung stehende Ladeleistung und/oder eine zur Verfügung stehende Entladeleistung bezüglich eines vorbestimmten Zeitraums ermöglicht es, die Steuerung des Energieversorgungssystems zu verbessern, indem freie Kapazitäten, zur Verfügung stehende Ladeleistungen und/oder zur Verfügung stehende Entladeleistungen vorausschauend identifiziert werden. Dadurch kann schnell und zeiteffizient auf Leistungsschwankungen im Energieversorgungssystem reagiert werden.

Der prognostizierte Leistungsbedarf eines Schienenfahrzeugs während eines vorbestimmten Zeitraums kann beispielsweise auf Basis eines Fahrplans und/oder eines Dienstplans prognostiziert werden. Ferner können Einflussgrößen, wie beispielsweise ein Gewicht und/oder eine Geländetopologie sowie vorgesehene Brems- und/oder Beschleunigungsvorgänge bei der Prognose des Leistungsbedarfs berücksichtigt werden. Eine Genauigkeit der Prognose insbesondere betreffend die freie Kapazität kann auf diese Weise verbessert werden.

Eine Übertragung der Informationen zwischen der Datenverarbeitungsvorrichtung und den Schienenfahrzeugen erfolgt vorzugsweise mittels drahtlose Kommunikationsverbindungen. Für die drahtlose Übertragung wird beispielsweise ein Mobilfunksystem verwendet, welches bereits für eine Informationen anderer Art zwischen der Datenverarbeitungsvorrichtung und den Schienenfahrzeugen eingesetzt wird. Dieses Mobilfunksystem gewährleistet sichere Kommunikationsverbindung, insbesondere eine hohe Abhörsicherheit durch eine verschlüsselte Übertragung.

Die Berücksichtigung des Betriebszustands des Energieversorgungssystems für die Ermittlung der Informationen zweiter Art ermöglicht eine Steigerung der Effizienz des erfindungsgemäßen Verfahrens. Ein Regelleistungsbedarf kann durch diese schnell und zuverlässig ermittelt werden. Ferner kann eine erforderliche Regelleistung zum Zwecke eines effizienten Betriebs des Energieversorgungssystems mit hoher Genauigkeit ermittelt werden. Temporäre oder sich schnell verändernde Bedarfsanforderungen an elektrischer Energie in dem Energieversorgungssystem können mithilfe der Energiespeicher der Mehrzahl Schienenfahrzeuge der Flotte kurzfristig und effizient kompensiert werden. Überkapazitäten können zuverlässig absorbiert und/oder zwischengespeichert werden. Dies ermöglicht es, beispielsweise regenerative Energiequellen auf effiziente Weise zum Betrieb des Energieversorgungssystems zu nutzen.

Bei dem Betriebszustand des Energieversorgungssystems handelt es sich insbesondere um eine Information betreffend einen Energiebedarf in wenigstens einem Abschnitt des Energieversorgungssystems. Ferner kann es sich bei dem Betriebszustand des Energieversorgungssystems um eine zur Verfügung stehende elektrische Energie, eine Überkapazität an elektrischer Energie, einen Bedarf an elektrischer Energie, eine Prognose betreffend einen zukünftigen Bedarf und/oder eine Prognose betreffend eine zukünftig überschüssige elektrische Energie innerhalb eines vorbestimmten Zeitraums in dem Energieversorgungssystem handeln. Überdies kann die Information betreffend den Betriebszustand des Energieversorgungssystems Leistungsschwankungen betreffen, welche beispielsweise durch Schwankungen einer regenerativen Energieerzeugung verursacht sind.

Ferner kann vorgesehen sein, einen Betriebszustand des jeweiligen Schienenfahrzeugs zu erfassen und eine diesen Betriebszustand betreffende vierte Information der Datenverarbeitungsvorrichtung mittels der Programmierschnittstelle bereitzustellen. Auf Basis dieser ergänzenden vierten Information betreffend den Betriebszustand und der Information erster Art wird von der zentralen Datenverarbeitungsvorrichtung die Information zweiter Art ermittelt. Hierdurch kann insbesondere ein schonender Umgang mit dem Energiespeicher erreicht bzw. eine übermäßige Belastung des Energiespeichers vermieden werden. Beispielsweise kann für den Fall eines Abstellbetriebs eines Schienenfahrzeugs mit länger andauerndem Stillstand ein vorbestimmter Ladezustand des Energiespeichers vorgesehen werden. Eine Alterung des Energiespeichers während des Abstellbetriebs kann dadurch verringert werden. Zudem können dadurch auch Schienenfahrzeuge einen Beitrag zu der Regelleistungskapazität leisten, welche nicht in einem Fahrbetrieb sind. Vorteilhafterweise kann von der Datenverwaltungsvorrichtung ein Entladevorgang oder Ladevorgang der Batterien von abgestellten Schienenfahrzeugen unter Berücksichtigung ihres jeweiligen Betriebszustands gesteuert werden.

Das erfindungsgemäße System ermöglicht es, eine Information betreffend eine Betriebskenngröße des Energiespeichers eines jeweiligen Schienenfahrzeugs von außerhalb des Schienenfahrzeugs bzw. von extern abzufragen sowie einen Betriebszustand des Energiespeichers zu steuern. Insbesondere kann der Betriebszustand des Energiespeichers gesteuert werden, indem Soll-Werte für vorbestimmte Betriebskenngrößen vorgegeben werden. Der Energiespeicher eines jeweiligen Schienenfahrzeugs kann dadurch als Teil eines virtuellen Kraftwerks zur Bereitstellung einer Regelleistungskapazität genutzt werden. Insbesondere kann der Energiespeicher als ein Zwischenspeicher für überschüssige elektrische Energie genutzt werden, welche ansonsten ungenutzt bliebe.

Der zumindest eine Energiespeicher des Schienenfahrzeugs ist vorzugsweise als eine Antriebs- bzw. Traktionsbatterie ausgeführt und dazu eingerichtet, elektrische Energie für ein elektrisches Antriebssystem Schienenfahrzeugs bereitzustellen. Mithilfe der Traktionsbatterie kann schnell und zuverlässig eine hohe Kapazität zur Aufnahme oder Abgabe einer Regelleistung bereitgestellt werden.

Die Mehrzahl Schienenfahrzeuge der Flotte ist mittels der Programmierschnittstelle zum Zwecke einer Bereitstellung von Informationen betreffend eine Betriebskenngröße ihres jeweiligen Energiespeichers mit der Datenverarbeitungsvorrichtung verbunden. Energiespeicher von Fahrzeugflotten und/oder Fahrzeugverbänden können dadurch zur Bereitstellung einer großen Regelleistungskapazität gemeinsam genutzt werden. Dies ermöglicht es, große Mengen an elektrischer Energie schnell zwischenzuspeichern und wieder abzugeben. Dadurch kann elektrische Energie kurzfristig aufgenommen und über einen längeren Zeitraum verteilt nach Maßgabe eines Bedarfs wieder abgegeben werden. Eine hohe Effizienz des Betriebs eines Energieversorgungssystems unter Verwendung von regenerativen Energiequellen wird dadurch zuverlässig und kostengünstig ermöglicht. Des Weiteren kann dadurch eine Belastung einzelner Energiespeicher reduziert werden.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen näher erläutert. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen:
- FIG 1: ein erfindungsgemäßes System,
- FIG 2: ein erstes Beispiel des erfindungsgemäßen Verfahrens, und
- FIG 3: ein zweites, erweitertes Beispiel des erfindungsgemäßen Verfahrens.

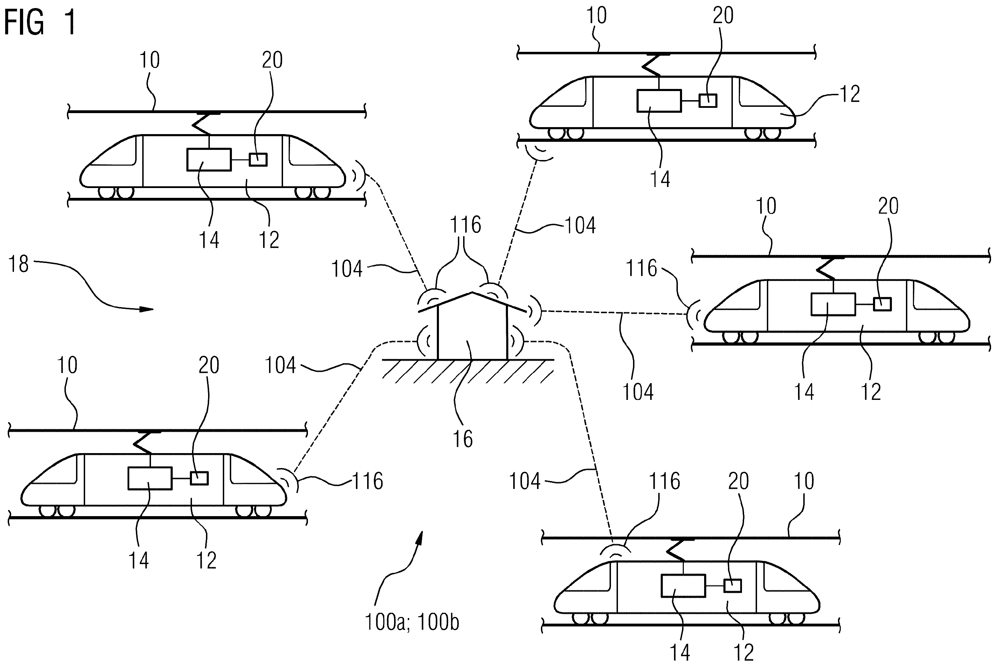

FIG 1 zeigt schematisch ein erfindungsgemäßes System 18, mittels welchem ein verbesserter Betrieb eines stationären Energieversorgungssystems 10 für elektrische Schienenfahrzeuge 12 realisierbar ist.

Das System 18 weist ein stationäres Energieversorgungssystem 10 auf, welches dazu eingerichtet ist, elektrische Energie für Schienenfahrzeuge 12 bereitzustellen. Vorliegend sind lediglich einzelne Abschnitte des stationären Energieversorgungssystems 10 schematisch in Form von Oberleitungsabschnitten, mit denen die Schienenfahrzeuge 12 über Stromabnehmer elektrisch verbindbar sind, dargestellt.

Beispielhaft umfasst das stationäre Energieversorgungssystem 10 ein streckenseitiges Oberleitungssystem mit Fahrdrähten bzw. Oberleitungen auf. Mithilfe eines mit der Oberleitung elektrisch verbundenen Pantographen kann ein Schienenfahrzeug 12 elektrische Energie von dem Energieversorgungssystem 10 beziehen oder diese in das Energieversorgungssystem 10 einspeisen. Bevorzugterweise handelt es sich bei dem Energieversorgungssystem 10 um eine Bahnstromversorgung, welche Schienenfahrzeuge 12 über Oberleitungssystem mit elektrischer Energie versorgt. Das Energieversorgungssystem 10 bzw. die Bahnstromversorgung umfasst ferner nicht speziell dargestellte elektrische Energiequellen und/oder ist mit zumindest einer solchen Energiequelle, beispielsweise einem öffentlichen Stromnetz, verbunden. Insbesondere kann es sich bei wenigstens einem Teil der Energiequellen um regenerative Energieerzeuger wie beispielsweise Photovoltaikanlagen oder Windkraftanlagen handeln. Diese Energiequellen speisen beispielhaft elektrische Energie unmittelbar in das Energieversorgungssystem 10 ein. Naturgemäß unterliegt die Erzeugung elektrischer Energie durch regenerative Energiequellen jedoch Schwankungen. Um dennoch einen zuverlässigen Betrieb des Energieversorgungssystems 10 zu ermöglichen, bedarf es einer Regelleistungskapazität, welche dazu dient, derartige Schwankungen auszugleichen. Hierfür kann das Energieversorgungssystem 10 beispielhaft nicht speziell dargestellte stationäre Energiespeicher oder Energiequellen umfassen, welche schnell einen Bedarf der Speicherung oder der Erzeugung elektrischer Energie erfüllen können. Mithilfe stationären Energiespeicher kann beispielsweise eine überschüssige elektrische Energie aufgenommen und zwischengespeichert werden.

Ferner weist das System 18 mehrere elektrische Schienenfahrzeuge 12 einer Schienenfahrzeugflotte auf. Beispielhaft handelt es sich bei einer Mehrzahl der Schienenfahrzeuge 12 dieser Flotte, im Beispiel der FIG 1 alle Schienenfahrzeuge 12, um batterieelektrische Schienenfahrzeuge. Diese Schienenfahrzeuge 12 weisen jeweils zumindest einen Energiespeicher 14 auf, welcher als eine Antriebs- bzw. Traktionsbatterie ausgeführt ist und in welchem eine ausreichende Energiemenge gespeichert werden kann, um dem elektrischen Antriebssystem des Schienenfahrzeugs 12 eine Antriebsenergie für eine vorbestimmte Reichweite bereitstellen zu können. Entlang von Streckenabschnitten, welche nicht mit dem Energieversorgungssystem 10 bzw. mit Oberleitungen ausgestattet sind, kann das Schienenfahrzeug 12 hierdurch elektrisch betrieben und angetrieben werden.

Vorliegend werden die Energiespeicher 14 der Schienenfahrzeuge 12 mithilfe des Energieversorgungssystems 10 mit elektrischer Energie geladen. Dies kann sowohl während eines Fahrbetriebs als auch während eines Stillstands des Schienenfahrzeugs 12, beispielsweise im Bereich einer mit einer Oberleitung ausgestatteten Haltestelle oder Ladestation erfolgen. Im Beispiel der FIG 1 weist jedes der mehreren elektrischen Schienenfahrzeuge 12 des Systems 18 einen Energiespeicher 14 der zuvor genannten Art auf. Des Weiteren ist jeder Energiespeicher 14 der mehreren Schienenfahrzeuge 12 derart mit dem Energieversorgungssystem 10 verbindbar, dass eine Übertragung von elektrischer Energie von dem Energieversorgungssystem 10 zu dem Energiespeicher 14 und/oder elektrische Energie von dem Energiespeicher 14 zu dem stationären Energieversorgungssystem 10 realisierbar ist. Dadurch kann elektrische Energie von jedem der Schienenfahrzeuge 12 entweder aus dem Energieversorgungssystem 10 bezogen oder in das stationäre Energieversorgungssystem 10 eingespeist werden.

Jedes der Mehrzahl Schienenfahrzeuge 12 der Flotte weist eine Steuervorrichtung 20 auf. Mittels der Steuervorrichtung 20 wird ein Laden und Entladen des elektrischen Energiespeichers 14 gesteuert. Zudem ist jede dieser Steuervorrichtungen 20 dazu eingerichtet, zumindest eine Betriebskenngröße des jeweils zugehörigen Energiespeichers 14 zu erfassen. Als Betriebskenngröße kann dabei ein Ladezustand, eine Ist-Ladeleistung, eine Ist-Entladeleistung, eine maximale Ladeleistung und/oder eine maximale Entladeleistung erfasst werden. Beispielsweise weist die Steuervorrichtung 20 ein Batterieverwaltungssystem, im englischen Sprachgebrauch als "Battery Management System", abgekürzt "BMS", bezeichnet, auf.

Ferner weist das System 18 eine zentrale Datenverarbeitungsvorrichtung 16 auf. Bei der zentralen Datenverarbeitungsvorrichtung 16 handelt es sich beispielhaft um einen stationären Server bzw. eine stationäre Recheneinheit, welcher im Zusammenhang mit einem Bahnbetrieb auch als Landseite bezeichnet wird. Die zentrale Datenverarbeitungsvorrichtung 16 ist Funkverbindungen den mehreren Schienenfahrzeugen 12 verbunden, um Daten bzw. Informationen zwischen der zentralen Datenverarbeitungsvorrichtung 16 und den Steuervorrichtungen 12 in den Schienenfahrzeugen 12 zu übertragen. Die Bereitstellung der Informationen nach der Übertragung über die Funkschnittstelle erfolgt mittels einer Programmierschnittstelle. Mithilfe der Programmierschnittstelle kann sowohl eine Art als auch ein Umfang der zwischen den genannten Schienenfahrzeugen 12 und der zentralen Datenverarbeitungsvorrichtung 16 zu übertragenden Informationen gesteuert werden. Ferner ist vorgesehen, dass mithilfe der Programmierschnittstelle gesteuert wird, ob und wann vorbestimmte Informationen abgefragt werden oder dass Informationen innerhalb von vorbestimmten Zeitintervallen automatisch zwischen einem der mehreren Schienenfahrzeuge 12 und der zentralen Datenverarbeitungsvorrichtung 16 übertragen werden.

Die Programmierschnittstelle wird vorliegend dazu verwendet, Informationen betreffend eine Betriebskenngröße, wie beispielsweise einen Ist-Ladezustand, eine Ist-Ladeleistung, eine Ist-Entladeleistung, eine maximalen Ladeleistung und/oder eine maximalen Entladeleistung eines jeden der Energiespeicher 14 der mehreren Schienenfahrzeuge 12 abzufragen und einen Soll-Betriebszustand mittels der zentralen Datenverarbeitungsvorrichtung 16 vorzugeben. Mithilfe einer Vorgabe des Soll-Betriebszustands kann beispielsweise ein Ziel-Ladezustand sowie eine Ladeleistung bzw. Entladeleistung vorgegeben werden. Dadurch können vorbestimmte zeitliche Verläufe eines jeweiligen Ladevorgangs oder eines Entladevorgangs vorgegeben werden. Dies ermöglicht es, mithilfe der Energiespeicher 14 der Schienenfahrzeuge 12 eine Regelleistungskapazität bereitzustellen, wodurch gegebenenfalls bereits bestehende stationäre Energiespeicher ergänzt oder ersetzt werden können. Dadurch wird eine Fernsteuerung eines Betriebszustands der Energiespeicher 14 der Schienenfahrzeuge 12 durch die Datenverarbeitungsvorrichtung 16 ermöglicht. Mithilfe der Datenverarbeitungsvorrichtung 16 können dadurch einzelne oder mehrere Schienenfahrzeuge 12 einer Flotte sowie gegebenenfalls mehrere Flotten zur Bereitstellung einer Regelleistungskapazität, beispielsweise in Form eines virtuellen Kraftwerks, genutzt werden. Ein solches virtuelles Kraftwerk bietet die Möglichkeit, Schwankungen in der elektrischen Energieversorgung, welche beispielsweise infolge einer regenerativen Energieerzeugung auftreten, mithilfe des stationären Energieversorgungssystems 10 zumindest teilweise zu kompensieren. Mittels der zur Verfügung stehenden Energiespeicher 14 der Schienenfahrzeuge 12 kann schnell und zuverlässig überschüssige elektrische Energie aufgenommen und zwischengespeichert werden oder bei Bedarf eingespeist werden. Dies ermöglicht es, einen effizienten Betrieb des Energieversorgungssystems 10 bereitzustellen.

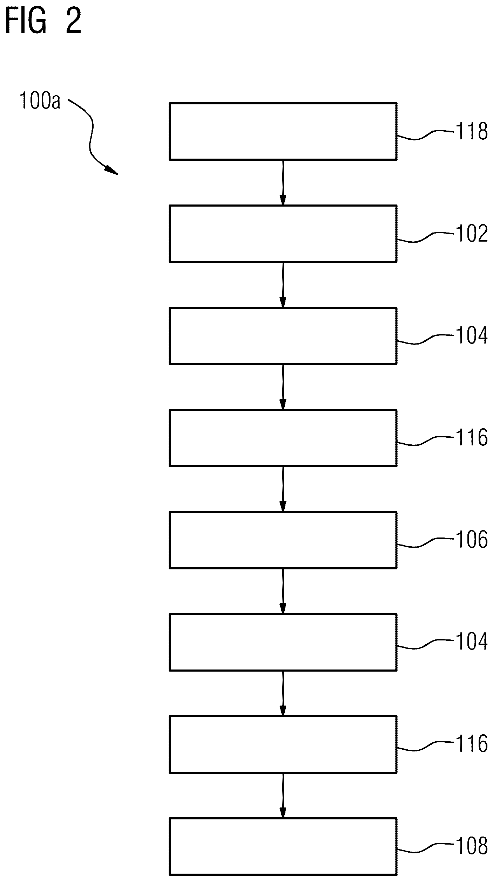

FIG 2 illustriert anhand eines schematischen Ablaufdiagramms ein erstes Beispiel eines Verfahrens 100a zum Betreiben eines Energieversorgungssystems 10 für elektrische Schienenfahrzeuge 12, bei welchem ein Betriebszustand der Energiespeicher 14 der Schienenfahrzeuge 12 ferngesteuert wird. Im Folgenden wird das erste Beispiel des Verfahrens 100a anhand des im Zusammenhang mit FIG 1 näher beschriebenen Ausführungsbeispiels des Systems 18 erläutert.

Zunächst sieht das vorliegende Beispiel des Verfahrens 100a vor, dass mittels der Datenverarbeitungsvorrichtung 16 eine Information betreffend einen erfassten Betriebszustand des Energieversorgungssystems 10 ermittelt wird, Schritt 118. Bei der Information betreffend den Betriebszustand des Energieversorgungssystems 10 handelt es sich beispielsweise um eine Information betreffend eine zur Verfügung stehende elektrische Energie, eine Überkapazität oder eine Unterkapazität einer bereitstellbaren elektrischen Energie und/oder um eine Prognose betreffend einen zukünftigen Bedarf, eine zukünftige überschüssige Leistung und/oder eine zukünftige Schwankung bei der Energieerzeugung, insbesondere einer regenerativen Energieerzeugung in dem System 18.

Ferner sieht das Verfahren 100a vor, dass mittels einer Steuervorrichtung 20 eines jeden der mehreren Schienenfahrzeuge 12 eine Betriebskenngröße eines jeweils zugehörigen Energiespeichers 14 erfasst wird, Schritt 102. Dieser Schritt 102 kann dabei vor, parallel oder nach dem Schritt 118 und insbesondere in vorgegebenen zeitlichen Abständen durchgeführt werden. Zweckmäßigerweise wird in dem Schritt 102 als Betriebskenngröße eines der Energiespeicher 14 ein Ist-Ladezustand, eine Ist-Ladeleistung, eine Ist-Entladeleistung, eine maximale Ladeleistung, eine maximale Entladeleistung, eine freie Kapazität und/oder eine Gesamt-Kapazität erfasst. Anschließend wird von den Schienenfahrzeugen 12 jeweils eine die erfasste Betriebskenngröße betreffende Information erster Art der jeweiligen Programmierschnittstelle bereitgestellt, Schritt 104, und diese Information erster Art über die Funkschnittstelle zu der Datenverarbeitungsvorrichtung 16 übertragen, Schritt 116.

Auf Basis der von den Schienenfahrzeugen 12 mittels der Programmierschnittstelle bereitgestellten Informationen erster Art und der Information betreffend den Betriebszustand des Energieversorgungssystems 10 wird von der Datenverarbeitungsvorrichtung 16 ein jeweiliger Soll-Betriebszustand für jeden der Energiespeicher 14 der Schienenfahrzeuge 12 separat ermittelt, Schritt 106. Bei dem Soll-Betriebszustand handelt es sich beispielsweise um einen Soll-Wert für einen der vorstehend genannten Betriebskenngrößen des Energiespeichers 14. Zweckmäßigerweise handelt es sich um einen Soll-Wert betreffend eine Ladeleistung oder eine Entladeleistung sowie um einen Soll-Wert betreffend den Ladezustand.

In Kenntnis eines Bedarfs an elektrischer Energie und einer aktuell bereitstellbaren elektrischen Energie durch die Energiequellen des Energieversorgungssystems 10 und/oder die mit diesem verbundenen Energiequellen kann auf einfache und zuverlässige Weise von der zentralen Datenverarbeitungsvorrichtung 16 ermittelt werden, inwieweit ein Bedarf an von den Energiespeichern 14 der Schienenfahrzeuge 12 bereitzustellender Regelleistungskapazität besteht. Auf diese Weise wird für jeden Energiespeicher 14 der Schienenfahrzeuge 12 jeweils ein zugehöriger Soll-Betriebszustand zentral von der Datenverarbeitungsvorrichtung 16 ermittelt.

Anschließend wird von den Schienenfahrzeugen 12 jeweils eine die erfasste Betriebskenngröße betreffende Information erster Art der jeweiligen Programmierschnittstelle bereitgestellt, Schritt 104, und diese Information zweiter Art über die Funkschnittstelle zu der Datenverarbeitungsvorrichtung 16 übertragen, Schritt 116. Daraufhin wird von der Datenverarbeitungsvorrichtung 16 für jedes Schienenfahrzeug 12 eine den jeweiligen Soll-Betriebszustand des Energiespeichers 14 betreffende Information zweiter Art der Programmierschnittstelle der Datenverarbeitungsvorrichtung 16 bereitgestellt, Schritt 104, und diese Informationen zweiter Art über die Funkschnittstelle zu den Schienenfahrzeugen 12 übertragen, Schritt 116.

Auf Basis der über die Programmierschnittstelle bereitgestellten Information zweiter Art betreffend den Soll-Betriebszustand wird von der Steuervorrichtung 20 des jeweiligen Schienenfahrzeugs 12 anschließend eine Ist-Ladeleistung bzw. Ist-Entladeleistung sowie ein Ist-Ladezustand des Energiespeichers 14 an die vorgegebene Soll-Ladeleistung bzw. Soll-Entladeleistung sowie den vorgegebenen Soll-Ladezustand des Energiespeichers 14 angepasst, Schritt 108.

Besteht beispielsweise eine Überkapazität an elektrischer Energie in dem Energieversorgungssystem 10 vor, so wird mittels der von der Datenverarbeitungsvorrichtung 16 bereitgestellten Informationen zweiter Art ein Ladezustand zumindest eines Teils der Energiespeicher 14 der mehreren Schienenfahrzeuge 12 auf einen jeweils bestimmten Soll-Ladezustand erhöht. Ist die Energieerzeugung hingegen nicht bedarfsdeckend, so wird mittels der Informationen zweiter Art der Ladezustand der Energiespeicher 14 zumindest eines Teils der Schienenfahrzeuge 12 abgesenkt. Als Maßstab für eine Art und einen Umfang einer aufzunehmenden oder abzugebenden elektrischen Energiemenge ist der Soll-Ladezustand vorgesehen. Auf diese Weise kann schnell und bedarfsgerecht Schwankungen des Bedarfs bzw. der Erzeugung in dem Energieversorgungssystem 10 entgegengewirkt werden. Die Energiespeicher 14 der Schienenfahrzeuge 12 können dabei in zuverlässiger Weise und in großem Umfang eine Regelleistungskapazität bereitstellen. Ferner ermöglicht das von der Datenverarbeitungsvorrichtung 16 mittels der Informationen zweiter Art gesteuerte Laden bzw. Entladen von Energiespeichern 14 der Schienenfahrzeuge 12, dass diese schnell und effizient verfügbare elektrische Energie entweder zwischenspeichern oder abgeben. So können vorteilhaft insbesondere mit einer regenerativen Energieerzeugung einhergehende Schwankungen effizient und in einfacher Weise ausgeglichen werden. Dabei kann insbesondere die Kapazität bestehender stationärer Batteriespeicher durch die verfügbare Kapazität der Energiespeicher 14 der Schienenfahrzeuge 12 ergänzt oder ersetzt werden.

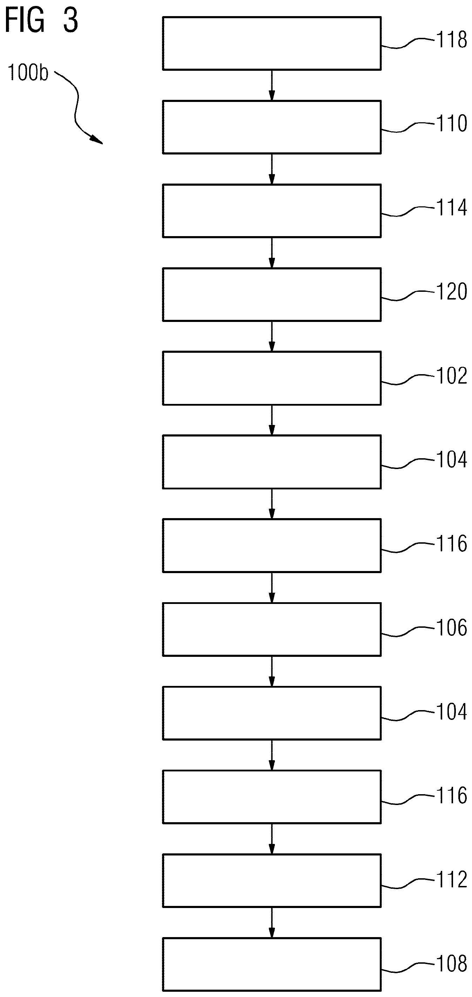

FIG 3 illustriert ebenfalls anhand eines Ablaufdiagramms ein zweites, erweitertes Beispiel des erfindungsgemäßen Verfahrens 100b. Auch das zweite Beispiel des Verfahrens 100a wird anhand des im Zusammenhang mit FIG 1 näher beschriebenen Ausführungsbeispiels des Systems 18 erläutert.

Das zweite Beispiel des Verfahrens 100b stellt eine Weiterbildung des im Zusammenhang mit FIG 2 erläuterten ersten Beispiels des Verfahrens 100a dar. Im Unterschied zum ersten Beispiel des Verfahrens 100a werden zusätzlich zu der Information betreffend den Betriebszustand des Energieversorgungssystems 10 und den Informationen betreffend die Betriebskenngrößen der Energiespeicher 14 der Schienenfahrzeuge 12 weitere Informationen zum Zwecke der Ermittlung des jeweiligen Soll-Ladezustands der Energiespeicher 14 berücksichtigt.

Eine der weiteren Informationen betrifft einen jeweiligen Leistungsbedarf der Schienenfahrzeuge 12. Hierfür wird von jedem der Schienenfahrzeuge 12 ein eigener Leistungsbedarf erfasst, Schritt 110. Die Information dritter Art betreffend diesen ermittelten Leistungsbedarf wird zusammen mit der Information erster Art über die Programmierschnittstelle des jeweiligen Schienenfahrzeugs 12 der Datenverarbeitungsvorrichtung 16 bereitgestellt, Schritt 104. Die Schritte 118 und 110 können entsprechend dem Ablaufdiagramm zeitlich nacheinander durchgeführt werden, in gleicher Weise jedoch auch gleichzeitig oder in zeitlich umgekehrter Reihenfolge. Anhand der ergänzenden Informationen dritter Art kann von der Datenverarbeitungsvorrichtung 16 bestimmt werden, inwieweit eine freie Kapazität der Energiespeicher 14 vorliegt und/oder von den Schienenfahrzeugen 12 als Regelleistungskapazität zur Verfügung gestellt werden kann.

Eine weitere der weiteren Informationen betrifft eine Prognose der Betriebskenngröße des Energiespeichers 14 des jeweiligen Schienenfahrzeugs 12 für einen zukünftigen vorbestimmten Zeitraum, Schritt 114, wobei der Zeitraum beispielsweise fünfzehn Minuten betragen kann. Die eine prognostizierte Betriebskenngröße betreffende Information, beispielsweise eine freie Kapazität, eine zur Verfügung stehende Ladeleistung und/oder Entladeleistung, wird der Datenverarbeitungsvorrichtung 16 als die Information erster Art mittels der Programmierschnittstelle bereitgestellt, Schritt 104. Die Steuervorrichtung 20 kann beispielsweise auf Basis eines Einsatzplans, eines Fahrplans, eines Besetzungszustands, eines Gewichts des Schienenfahrzeugs 12, einer Topologie einer vorgesehenen Fahrstrecke und/oder aus Erfahrungswerten bereits durchgeführter Fahrten die Betriebskenngröße abschätzen bzw. vorhersagen. In gleiche Weise kann die Steuervorrichtung 20 auf Basis dieser Informationen einen zukünftigen Leistungsbedarf prognostizieren und als Information dritter Art über die Programmierschnittstelle bereitstellen.

Eine weitere der weiteren Informationen betrifft einen erfassten jeweiligen Betriebszustand der Schienenfahrzeuge 12, Schritt 120. Auf Basis der Information vierter Art betreffend den jeweiligen Betriebszustand der Schienenfahrzeuge 12 kann eine insbesondere umfangreichere Nutzung der Energiespeicher 14 verwirklicht werden. Beispielsweise kann während eines Abstellbetriebs, bei welchem eine mehrere Stunden oder Tage andauernde Unterbrechung eines Fahrbetriebs des Schienenfahrzeugs 12 vorgesehen ist, während welcher das Schienenfahrzeug 12 jedoch weiterhin mit dem Energieversorgungssystem 10, beispielsweise einer Ladestation elektrisch verbunden ist, sowie die Steuervorrichtung 20 weiterhin über die Programmierschnittstelle mit der Datenverarbeitungsvorrichtung 16 kommunikationstechnisch verbunden ist, beispielsweise ein großer Teil der Gesamtkapazität des Energiespeichers 14 als Regelleistungskapazität bereitgestellt werden. Dabei kann, sofern die verfügbare Kapazität nicht für die Regelleistungskapazität benötigt wird, beispielsweise ein für die kalendarische Alterung des Energiespeichers 14 optimaler Ladezustand von der Steuervorrichtung 20 bzw. von der Datenverarbeitungsvorrichtung 16 mittels der Information zweiter Art eingestellt werden. Mithilfe der Programmierschnittstelle kann eine Vielzahl an individuell gestaltbaren Anwendungsfällen realisiert werden, insbesondere individuell von der das jeweilige Schienenfahrzeug 12 führenden Person und/oder allgemein von dem Betreiber der Flotte. Die Information vierter Art betreffend den Leistungsbedarf wird zusammen mit der Information erster Art sowie gegebenenfalls dritter Art über die Programmierschnittstelle des jeweiligen Schienenfahrzeugs 12 der Datenverarbeitungsvorrichtung 16 bereitgestellt, Schritt 104. Die Schritte 118, 110, 114 und 120 können entsprechend dem Ablaufdiagramm zeitlich nacheinander, in gleicher Weise jedoch auch gleichzeitig oder in zeitlich umgekehrter Reihenfolge durchgeführt werden.

Auf Basis der bereitgestellten Informationen wird wiederum für jeden Energiespeicher 14 der Schienenfahrzeuge 12 individuell ein Soll-Betriebszustand von der zentralen Datenverarbeitungsvorrichtung 16 ermittelt, Schritt 106, und eine entsprechende zweite Information über die Programmierschnittstelle bereitgestellt und über die Funkschnittstelle übertragen, Schritte 104 und 116.

Im Unterschied zu dem ersten Verfahren 100a der FIG 2 sieht das zweite Verfahren 100b beispielhaft weiterhin ergänzend vor, dass die übertragene zweite Information zunächst manuell überprüft, gegebenenfalls korrigiert und anschließend freigegeben wird, Schritt 112. Dies ermöglicht es der fahrzeugführenden Person vor Beginn der Umsetzung der Steuerung der Übertragung elektrischer Energie nach Bedarf einzugreifen. Dem individuellen Bedarf des Schienenfahrzeugs 12 bzw. der genaueren Kenntnis darüber wird auf diese Weise eine höhere Relevanz zugeordnet als einer optimierten Steuerung der Regelleistungskapazität durch die Datenverarbeitungsvorrichtung 16 des Energieversorgungssystems 10. Auf Basis der überprüften bzw. korrigierten und schließlich freigegebenen zweiten Information betreffend den Soll-Betriebszustand, insbesondere des Soll-Ladezustands, wird der bereits bezüglich FIG 1 und 2 beschriebene Austausch von elektrischer Energie zwischen dem Energiespeicher 14 des jeweiligen Schienenfahrzeugs 12 und dem Energieversorgungssystem 10 von der Steuervorrichtung 20 gesteuert, Schritt 108.

Eine durch die Energiespeicher 14 der Schienenfahrzeugflotte bereitstellbare Regelleistungskapazität kann von dem Betreiber beispielsweise auf einem Regelleistungsmarkt angeboten werden, beispielsweise in Form eines virtuellen Kraftwerks. Ein Umfang der angebotenen Regelleistung wird dabei beispielsweise von der zentralen Datenverarbeitungsvorrichtung 16 bestimmt. Zweckmäßigerweise werden bei dieser Berechnung Sicherheitsreserven, eine Lebensdauer des Energiespeichers 14 und die mithilfe der Programmierschnittstelle übertragene erste Information betreffend insbesondere den Ladezustand des Energiespeichers 14 einbezogen bzw. berücksichtigt. Die verschiedenen, gegebenenfalls widerstrebenden Interessen werden von der zentralen Datenverarbeitungsvorrichtung 16 beispielsweise auf monetärer Basis abgewogen. Für einen Zeitraum, während dessen die angebotene Regelleistungskapazität über den Regelleistungsmarkt abgenommen wird, verteilt die zentrale Datenverarbeitungsvorrichtung 16 die vom Netz geforderte Soll-Regelleistung mithilfe der Programmierschnittstelle auf die Energiespeicher 14 der Schienenfahrzeuge 12. Ein Betreiber der Schienenfahrzeugflotte kann so einen zusätzlichen Nutzen erschließen.

## Patentansprüche

1. Verfahren (100a, 100b) zum Betreiben eines Energieversorgungssystems (10), wobei das Energieversorgungssystem (10) einer Versorgung einer Flotte von elektrischen Schienenfahrzeugen (12) dient, wobei eine Mehrzahl der Schienenfahrzeuge (12) jeweils zumindest einen elektrischen Energiespeicher (14) aufweist, welcher einer Versorgung eines Antriebssystems des Schienenfahrzeugs (12) dient, wobei eine jeweilige Steuervorrichtung (20) der Mehrzahl Schienenfahrzeuge (12) über eine Programmierschnittstelle mit einer zentralen Datenverarbeitungsvorrichtung (16) verbunden ist, bei welchem
- eine jeweilige Information erster Art betreffend eine erfasste Betriebskenngröße des Energiespeichers (14) des jeweiligen Schienenfahrzeugs (12) der Datenverarbeitungsvorrichtung (16) mittels der Programmierschnittstelle bereitgestellt wird,
- von der Datenverarbeitungsvorrichtung (16) auf Basis der bereitgestellten Informationen erster Art und abhängig von einem Betriebszustand des Energieversorgungssystems (10) ein Soll-Betriebszustand des Energiespeichers (14) des jeweiligen Schienenfahrzeugs (12) ermittelt wird (106) und der Steuervorrichtung (20) des jeweiligen Schienenfahrzeugs (12) als jeweilige Information zweiter Art mittels der Programmierschnittstelle bereitgestellt wird, und
- von der Steuervorrichtung (20) des jeweiligen Schienenfahrzeugs (12) abhängig von der bereitgestellten Information zweiter Art ein Laden des Energiespeichers (14) aus dem Energieversorgungssystem (10) oder ein Entladen des Energiespeichers (14) in das Energieversorgungssystem (10) gesteuert wird (108).

2. Verfahren (100a, 100b) nach Anspruch 1, bei welchem
als die Betriebskenngröße des Energiespeichers (14) ein Ist-Ladezustand, eine Ist-Ladeleistung, eine Ist-Entladeleistung, eine maximale Ladeleistung, eine maximale Entladeleistung, eine freie Kapazität und/oder eine Gesamt-Kapazität erfasst wird (102).

3. Verfahren (100b) nach Anspruch 1 oder 2, bei welchem
- ein Leistungsbedarf des jeweiligen Schienenfahrzeugs (12) erfasst wird (110) und der Datenverarbeitungsvorrichtung (16) als eine Information dritter Art mittels der Programmierschnittstelle bereitgestellt wird (104), und
- von der Datenverarbeitungsvorrichtung (16) auf Basis der bereitgestellten (104) Informationen erster Art und dritter Art die Information zweiter Art für das jeweilige Schienenfahrzeug (12) ermittelt wird (106).

4. Verfahren (100b) nach einem der vorhergehenden Ansprüche, bei welchem
- die Betriebskenngröße des Energiespeichers (14) des jeweiligen Schienenfahrzeugs (12) für einen zukünftigen vorbestimmten Zeitraums prognostiziert wird (114) und als die Information erster Art der Datenverarbeitungsvorrichtung (16) mittels der Programmierschnittstelle bereitgestellt wird, wobei die prognostizierte Betriebskenngröße insbesondere auf Basis eines prognostizierten Leistungsbedarfs des jeweiligen Schienenfahrzeugs (12) während des vorbestimmten Zeitraums bestimmt wird (114), und
- von der Datenverarbeitungsvorrichtung (16) auf Basis der bereitgestellten Informationen erster Art der Soll-Betriebszustand des Energiespeichers (14) des jeweiligen Schienenfahrzeugs (12) für den zukünftigen vorbestimmten Zeitraum ermittelt und als Information zweiter Art mittels der Programmierschnittstelle bereitgestellt wird.

5. Verfahren (100b) nach einem der vorhergehenden Ansprüche, bei welchem
- die bereitgestellte Information zweiter Art von der Steuervorrichtung (20) des jeweiligen Schienenfahrzeugs (12), insbesondere manuell unterstützt, überprüft sowie gegebenenfalls korrigiert wird (112), und
- auf Basis der überprüften und gegebenenfalls korrigierten Information zweiter Art von der Steuervorrichtung (20) des jeweiligen Schienenfahrzeugs (12) das Laden des Energiespeichers (14) aus dem Energieversorgungssystem (10) oder das Entladen des Energiespeichers (14) in das Energieversorgungssystem (10) gesteuert wird (108), wobei, sofern die Information zweiter Art korrigiert wurde, eine Information bezüglich der Korrektur, insbesondere die korrigierte Information zweiter Art, der Datenverarbeitungsvorrichtung (16) von der Steuervorrichtung (20) mittels der Programmierschnittstelle bereitgestellt wird.

6. Verfahren (100b) nach einem der vorhergehenden Ansprüche, bei welchem
- von jedem der Mehrzahl Schienenfahrzeuge (12) der Flotte jeweils ein Betriebszustand erfasst und eine den Betriebszustand betreffende vierte Information der Datenverarbeitungsvorrichtung (16) mittels der Programmierschnittstelle bereitgestellt wird, und
- von der Datenverarbeitungsvorrichtung (16) auf Basis der Informationen vierter Art und der Information erster Art die Information zweiter Art des jeweiligen Schienenfahrzeugs (12) ermittelt wird.

7. System (18), umfassend:
- ein Energieversorgungssystem (10), welches ausgestaltet ist, eine Flotte von elektrischen Schienenfahrzeugen (12) mit elektrischer Energie zu versorgen,
- eine Mehrzahl Schienenfahrzeuge (12) der Flotte, welche jeweils zumindest einen Energiespeicher (14) aufweist, wobei der Energiespeicher (14) einer Versorgung eines Antriebssystems des Schienenfahrzeugs (12) dient, und welche jeweils eine Steuervorrichtung (20) aufweist, die ausgestaltet ist, ein Laden des Energiespeichers (14) aus dem Energieversorgungssystem (10) oder ein Entladen des Energiespeichers (14) in das Energieversorgungssystem (10) zu steuern, und
- eine zentrale Datenverarbeitungsvorrichtung (16), welche ausgestaltet ist, einen Soll-Betriebszustand des Energiespeichers (14) des jeweiligen Schienenfahrzeugs (12) zu steuern,
wobei die Steuervorrichtungen (20) der Mehrzahl Schienenfahrzeuge (12) jeweils über eine Programmierschnittstelle mit der zentralen Datenverarbeitungsvorrichtung (16) verbunden sind, wobei die jeweilige Programmierschnittstelle einer Bereitstellung von Informationen dient, und
wobei das Energieversorgungssystem (10), die Mehrzahl Schienenfahrzeuge (12) und die zentrale Datenverarbeitungsvorrichtung (16) ausgestaltet sind zur Durchführung des Verfahrens (100a, 100b) nach einem der Ansprüche 1 bis 6.

8. System (18) nach Anspruch 7, wobei
- das Energieversorgungssystem (10) als ein Bahnstromsystem ausgestaltet ist, und/oder
- die Datenverarbeitungsvorrichtung (16) dem Energieversorgungssystem (10) und/oder einem Betreiber der Flotte von Schienenfahrzeugen (12) zugeordnet ist.

9. Computerprogramm, welches bei dessen Ausführung das System (18) nach Anspruch 7 oder 8 dazu veranlasst, das Verfahren (100a, 100b) nach einem der Ansprüche 1 bis 6 durchzuführen.

10. Computerlesbares Medium, aufweisend Instruktionen, welche das System (18) nach Anspruch 7 oder 8 dazu veranlassen, das Verfahren (100a, 100b) nach einem der Ansprüche 1 bis 6 durchzuführen.
